## Europäisches Patentamt

## European Patent Office

## Office européen des brevets

(11) Veröffentlichungsnummer: **0 107 072**
**A2**

(19)

(21) Anmeldenummer: 83109563.3

(22) Anmeldetag: 26.09.83

(51) Int. Cl.³: **H 04 N 9/02**

## EUROPÄISCHE PATENTANMELDUNG

(12)

(30) Priorität: 30.09.82 DE 3236281

(43) Veröffentlichungstag der Anmeldung: 02.05.84
**Patentblatt 84/18**

(84) Benannte Vertragsstaaten: **AT CH DE FR GB IT LI**

(71) Anmelder: **SIEMENS AKTIENGESELLSCHAFT, Berlin und München Wittelsbacherplatz 2, D-8000 München 2 (DE)**

(72) Erfinder: **Maderlechner, Gerd, Dipl.-Phys., Arnikastrasse 5, D-8031 Gröbenzell (DE)**

(54) Verfahren zur Farbraumcodierung von digitalen Farb-Videosignalen und System zur Durchführung des Verfahrens.

(57) Es wird eine nichtlineare Transformation der RGB (ROT/GRÜN/BLAU)-Darstellung für jeden Bildpunkt durchgeführt, wobei die Aufteilung eines gedachten RGB-Farbraums, dessen drei Dimensionen durch die Farbparameter R, G und B repräsentiert sind und wobei das betreffende Informationswort einen Raumvektor vertritt, in farbspezifischen empfindungsmäßig gleichen Abstufungen erfolgt, so daß sich ein Farbraum mit unterschiedlich großen Volumenelementen in dem RGB-Farbraum ergibt. Das Verfahren führt zu einer vorteilhaften Datenreduktion.

SIEMENS AKTIENGESELLSCHAFT    Unser Zeichen

Berlin und München    VPA **82 P 1 9 2 6 E**

Verfahren zur Farbraumcodierung von digitalen Farb-Videosignalen und System zur Durchführung des Verfahrens

Die vorliegende Erfindung betrifft ein Verfahren zur Farbraumcodierung von digitalen Farb-Videosignalen unter Verwendung psychophysischer Eigenschaften des menschlichen Farbsehens sowie ein System zur Durchführung des Verfahrens.

Bei der digitalen Übertragung von Farb-Videosignalen oder Farb-Bildsignalen allgemein ist es im Hinblick auf die benötigte Bandbreite wünschenswert, die Datenrate zu reduzieren. Dies trifft auch für das Aufzeichnen solcher Signale zu, weil durch eine Reduktion der Datenrate eine Speicherplatzersparnis erzielt werden kann.

Aus dem Stand der Technik sind verschiedene Verfahren zur Codierung von Farbbildsignalen bekannt, siehe z.B. B.W. Frei, B. Baxter: "Rate-Distortion Coding Simulation for Color Image", IEEE COM-25,1385 (1977). Beim Stand der Technik wird zwischen der sog. geschlossenen Codierung und der sog. offenen Codierung der RGB (Rot/Grün/Blau)-Signale unterschieden, wobei bei der sog. geschlossenen Codierung ein Videosignal, das die gesamte Information über ein abgetastetes Farbbild enthält, als Ganzes codiert wird, während bei der sog. offenen Codierung das Videosignal zunächst vor seiner Codierung in seine Bestandteile, nämlich in die Information über die Farbart, eine Information über die Leuchtdichte u.s.f. zerlegt und erst anschließend codiert wird.

Außerdem sind aus dem Stand der Technik sog. DPCM-Codierungsverfahren, nämlich solche, bei denen beim Abtasten

Pap 1 The - 29.9.1982

von bewegten Bildern jeweils immer nur die gegenüber einem zuvor abgetasteten Bild veränderten Bildpunkt codiert werden, bekannt. Außerdem sind sog. Transformationscodierungs-Verfahren bekannt, bei denen die das Videosignal repräsentierenden Codewörtern durch mehr oder weniger komplizierte Umrechnungsverfahren in ihrer Bitzahl reduziert werden.

Die bekannten Codierungsverfahren der eingangs genannten Art bieten jedoch noch keinesfalls eine drastische Reduzierung der Bitrate und sind im übrigen teilweise mit beträchtlichem apparativen Aufwand verbunden. Außerdem sind solche Codierungsverfahren, bei denen Umrechnungsvorgänge abgewickelt werden müssen, zeitintensiv, so daß ein Quasi-Echtzeitbetrieb nicht in allen Fällen gewährleistet werden kann.

Der vorliegenden Erfindung liegt die Aufgabe zugrunde, ein Verfahren zur Farbraumcodierung von digitalen Farbbildern zum Zwecke einer drastischen Datenreduktion zu schaffen. Der Erfindung liegt außerdem die Aufgabe zugrunde ein System anzugeben, mittels dessen das erfindungsgemäße Verfahren durchgeführt werden kann.

Die Erfindung geht von der Tatsache aus, daß das menschliche Sehvermögen unterschiedliche Empfindlichkeitsgrade für die verschiedenen Spektralbereiche aufweist. In den bisher bekannten Codierungsverfahren wird auf diese Tatsache keine Rücksicht genommen, d.h. daß die psychophysischen Zusammenhänge der Farbinformation nicht ausgenutzt werden.

Aufgabengemäß wird ein Verfahren zur Farbraumcodierung von digitalen Farb-Videosignalen unter Ausnutzung psychophysischer Eigenschaften des menschlichen Farbsehens, bei

0107072

dem eine digitale Rot/Grün/Blau RGB-Darstellung eines Farbbildes zugrundegelegt ist, vorgeschlagen, das dadurch gekennzeichnet ist, daß eine nichtlineare Transformation der RGB-Darstellung für jeden der betreffenden abgetasteten Bildpunkte durchgeführt wird, wobei die Aufteilung eines gedachten RGB-Farbraums, dessen drei Dimensionen durch die Farbparameter R(Rot), G(Grün) und B(Blau) repräsentiert sind und wobei das betreffende Informationswort einen Raumvektor vertritt, in farbspezifisch empfindungsmäßig gleichen Abstufungen erfolgt, so daß sich ein Farbraum mit unterschiedlich großen Volumenelementen in dem RGB-Farb-raum ergibt.

Die Erfindung bietet den Vorteil, daß die Anzahl der Informationselemente für das Farb-Videosignal stark reduziert werden kann, nämlich von z.B. 3 x 8 Bit für die drei Farben je Bildpunkt auf ein 10-Bit-Codewort je Bildpunkt, in dem unterschiedlich große Anzahlen von Bits für die drei Farben enthalten sind. Die Erfindung macht sich außerdem den Vorteil zunutze, daß beispielsweise bei abnehmender Helligkeit die Anzahl unterscheidbarer Farbtöne abnimmt, was erfindungsgemäß zu einer erwünschten Datenreduktion führt.

Eine vorteilhafte Weiterbildung der Erfindung sieht vor, daß die Transformation empirisch bestimmt wird und über eine sog. Video-Look-Up-Tabelle realisiert wird.

Eine andere Weiterbildung für die Erfindung sieht vor, daß die Aufteilung über die Variablen "Farbton","Helligkeit" und "Sättigung" erfolgt.

Vorteilhafterweise ist außerdem in Weiterbildung der Erfindung vorgesehen, daß bisher bekannte Codierverfahren, welche räumliche und/oder zeitliche Korrelationen ausnutzen, mit dem erfindungsgemäßen Verfahren kombiniert werden, so daß eine noch größere Datenreduktion erzielt wird.

Im folgenden wird die Erfindung an Hand eines Blockschaltbildes für eine Schaltungsanordnung zur Durchführung des erfindungsgemäßen Verfahrens erläutert.

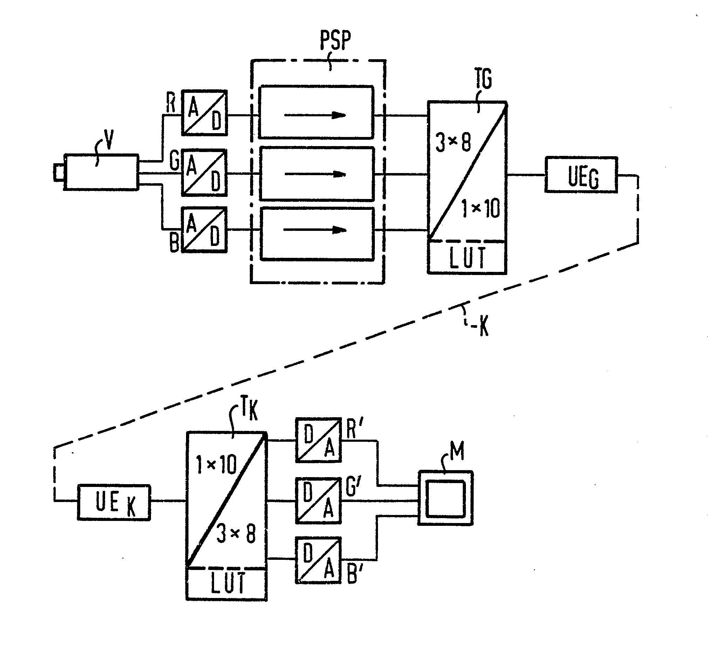

Die Figur zeigt ein System zur Abtastung, Übertragung und Wiedergabe von Farbbildern, bei dem das erfindungsgemäße Verfahren zur Anwendung kommt.

Das System besteht im wesentlichen aus einer Signalquelle, vorzugsweise einer Videokamera V, einer Transformationseinrichtung $T_G$ auf der gehenden Seite eines Übertragungskanals K, einer Transformationseinrichtung $T_K$ auf der kommenden Seite des Übertragungskanals K und einer Signalsenke, beispielsweise einem Monito M. In der Transformationseinrichtung $T_G$ wird mittels einer Bewertungstabelle oder "LOOK-UP"-Tabelle LUT die Aufteilung des RGB-Farbraums je Bildpunkt auf Grund von mittelbar, nämlich über A/D-Wandler, aus der Signalquelle zugeführten digitalen Farbsignalen für Rot, Grün und Blau vorgenommen. Aus den drei danach entstandenen Codewörtern wird ein gemeinsames Codewort berechnet, das mittelbar, nämlich über eine gehende Übertragung $UE_G$, an den Übertragungskanal K abgegeben wird. Auf der kommenden Seite des Übertragungskanals K wird das gemeinsame Codewort je Bildpunkt mittelbar, nämlich über eine kommende Übertragung $UE_K$, von der weiteren Transformationseinrichtung $T_K$ aufgenommen und in die drei Codewörter für die digitalen Farbsignale Rot, Grün und Blau zerlegt. Dann wird mittels einer Bewertungstabelle oder "LOOK-UP"-Tabelle LUT die auf der gehenden Seite vorgenommene Aufteilung des RGB-Farbraums rückgängig gemacht. Schließlich werden die drei Farbsignale für Rot, Grün und Blau mittelbar, nämlich über je einen D/A-
Wandler, als Signale R', G' bzw. B' der Signalsenke,
nämlich dem Monitor M, zugeführt. Die Bewertungstabellen
oder "LOOK-UP"-Tabellen LUT sind im allgemeinen als Festwertspeicher ausgeführt. Sie können jedoch vorteilhafterweise auch als programmierbare Speicher ausgeführt sein.
Das in der Figur gezeigte System sieht zweckmäßig einen
Pufferspeicher PSP vor, der zwischen die sendeseitigen
A/D-Wandler und die sendeseitige Transformationseinrichtung $T_G$ eingefügt ist, womit eine Pufferspeicherung der
drei Farbsignale für Rot, Grün und Blau bewirkt werden
kann, um eine zeitliche Anpassung zwischen der Zufuhr
dieser Signale und deren Verarbeitung zu gewährleisten.

In diesem System kann eine Auswahl von Koeffizienten für
den Vorgang der Unterteilung des gedachten RGB-Farbraums gemäß dem erfindungsgemäßen Verfahren nach einem
interaktiven Verfahren erfolgen. Die Auswahl der Koeffizienten kann jedoch ebenso nach psychophysischen Gesetzen
erfolgen. Vorteilhafterweise kann auch vorgesehen sein,
daß die Auswahl von Koeffizienten für den Vorgang der
Unterteilung nach einem interaktiven Verfahren u n d
nach psychophysischen Gesetzen erfolgt.

Erfindungsgemäß ist vorgesehen, daß die Farbparameter
für eine konstante Leuchtdichte codierungsmäßig optimal
kombiniert werden. Es ist jedoch auch möglich, die Parameter des Farb-Videosignals für einen konstanten Farbton
codierungsmäßig optimal zu codieren.

13 Patentansprüche
 1 Figur

01070'72

## Patentansprüche

1. Verfahren zur Farbraumcodierung von digitalen Farb-Videosignalen unter Ausnutzung psychophysischer Eigenschaften des menschlichen Farbsehens, bei dem eine digitale Rot/Grün/Blau (RGB)-Darstellung eines Farbbildes zugrundegelegt ist, dadurch g e k e n n z e i c h n e t , daß eine nichtlineare Transformation der RGB-Darstellung für jeden der betreffenden abgetasteten Bildpunkte durchgeführt wird, wobei die Aufteilung eines gedachten RGB-Farbraums, dessen drei Dimensionen durch die Farbparameter R(Rot), G(Grün) und B(Blau) repräsentiert sind und wobei das betreffende Informationswort einen Raumvektor vertritt, in farbspezifisch empfindungsmäßig gleichen Abstufungen erfolgt, so daß sich ein Farbraum mit unterschiedlich großen Volumenelementen in dem RGB-Farbraum ergibt.

2. Verfahren nach Anspruch 1, dadurch g e k e n n - z e i c h n e t , daß die Regeln für die nichtlineare Transformation empirisch bestimmt werden.

3. Verfahren nach Anspruch 1, dadurch g e k e n n - z e i c h n e t , daß die Aufteilung des gedachten RGB-Farbraums über die Variablen "Farbart", "Leuchtdichte" und "Sättigung" erfolgt.

4. Verfahren nach Anspruch 1 oder 3, dadurch g e - k e n n z e i c h n e t , daß eine Anzahl von Koeffizienten für den Vorgang der Unterteilung nach einem interaktiven Verfahren erfolgt.

5. Verfahren nach Anspruch 1 oder 3, dadurch g e - k e n n z e i c h n e t , daß eine Auswahl von Koeffizienten für den Vorgang der Unterteilung nach pschophysischen Gesetzen erfolgt.

6. Verfahren nach Anspruch 1 oder 3, dadurch g e - k e n n z e i c h n e t , daß eine Auswahl von Koeffizienten für den Vorgang der Unterteilung nach einem interaktiven Verfahren und nach psychophysischen Gesetzen erfolgt.

7. Verfahren nach einem der vorhergehenden Ansprüche, dadurch g e k e n n z e i c h n e t , daß die Farbparameter für eine konstante Leuchtdichte codierungsmäßig optimal kombiniert werden.

8. Verfahren nach einem der Ansprüche 1 - 6, dadurch g e k e n n z e i c h n e t , daß die Parameter des Farb-Videosignals für einen konstanten Farbton codierungsmäßig optimal kombiniert werden.

9. Verfahren nach einem der vorhergehenden Ansprüche, dadurch g e k e n n z e i c h n e t , daß eine Kombination mit einem der bekannten Codierungsverfahren, welche zeitliche und/oder räumliche Korrelationen ausnutzen, vorgesehen ist, so daß eine noch weitergehende Datenreduktion erreicht wird.

10. System zur Durchführung des Verfahrens nach einem oder mehreren der vorhergehenden Ansprüche, dadurch g e k e n n z e i c h n e t , daß auf der gehenden Seite eines Übertragungskanals (K) eine Transformationseinrichtung (TG) vorgesehen ist, die mittels einer Bewertungstabelle oder "LOOK-UP"-Tabelle (LUT) die Aufteilung des RGB-Farbraums je Bildpunkt aufgrund von mittelbar aus einer Signalquelle zugeführten digitalen Farbsignalen für Rot, Grün und Blau vornimmt und dann aus den drei entstandenen Codewörtern ein gemeinsames Codewort berechnet, das mittelbar an den Übertragungskanal (K) abgegeben wird, und daß auf der kommenden Seite des Übertragungskanals (K)

eine weitere Transformationseinrichtung ($T_K$) vorgesehen ist, die das gemeinsame Codewort je Bildpunkt mittelbar aufnimmt, es in drei Codewörter für die digitalen Farbsignale Rot, Grün und Blau zerlegt, dann mittels einer Bewertungstabelle oder "LOOK-UP"-Tabelle (LUT) die auf der gehenden Seite vorgenommene Aufteilung des RGB-Farbraums rückgängig macht und schließlich drei Farbsignale für Rot, Grün und Blau mittelbar an eine Signalsenke abgibt.

11. System nach Anspruch 10, dadurch  g e k e n n  -  z e i c h n e t  , daß die Bewertungstabellen oder "LOOK-UP"-Tabellen Festwertspeicher sind.

12. System nach Anspruch 10, dadurch  g e k e n n  -  z e i c h n e t  , daß die Bewertungstabellen oder "LOOK-UP"-Tabellen programmierbare Speicher sind.

13. System nach Anspruch 10, dadurch  g e k e n n  -  z e i c h n e t  , daß zwischen der Signalquelle und der Transformationseinrichtung ($T_G$) ein Pufferspeicher (PSP) angeordnet ist.